# EUROPEAN PATENT APPLICATION

(11) **EP 4 020 363 A1**
(43) Date of publication of application: **29.06.2022**
(21) Application number: 20854992.3
(22) Date of filing: 06.08.2020
(51) Int. Cl.: G06Q 30/06, G06Q 50/02

(54) **WORK RELIEVER MEDIATION SYSTEM AND FARM MACHINE SHARER MEDIATION SYSTEM**

(30) Priority: 19.08.2019 JP 2019149956
(71) Applicant: Yanmar Power Technology Co., Ltd., Osaka-shi Osaka 530-0013 (JP)
(72) Inventor: NISHIDA, Yusuke, Osaka-shi, Osaka 530-0014 (JP); NAKAMURA,Keiji, Osaka-shi Osaka 532-0003 (JP)
(74) Representative: Dennemeyer & Associates S.A.
(86) International application number: PCT/JP2020/030166
(87) International publication number: WO 2021/033562

(57) **Abstract**

A server (4) is configured to, upon receiving from a user terminal (2) a work relief request demand with respect to a predetermined work plan, select from among work reliever candidates a work reliever candidate who possesses a farm machine required for carrying out the predetermined work plan, and to notify the selected work reliever candidate that the relief request has been made. A work reliever candidate terminal (3) is configured to, upon being notified by the server (4) that the relief request has been made, display the predetermined work plan and be able to provide the server (4) with the intention of the work reliever candidate using the work reliever candidate terminal.

## Description

### TECHNICAL FIELD

The present invention relates to a work reliever mediation system and a farm machine sharer mediation system.

### BACKGROUND ART

Patent Literature 1 discloses a member farming support system having a cultivator terminal, a consumer terminal, and a management server connected to a network. The management server is a server operated by an administrator who manages a farmland. The cultivator terminal is a terminal used by a cultivator who provides a farmland to an administrator by lease, transfer or the like. The consumer terminal is a terminal used by a consumer who has a right to use a farmland.

In the member farming support system of Patent Literature 1, a consumer can select the most suitable farmland from a plant variety, a price, a harvest date, and the like desired by the consumer, and then determines whether the consumer performs agricultural work by himself/herself, or requests a cultivator who is provided with this farmland by lease, transfer, or the like to perform the agricultural work. That is, Patent Literature 1 discloses that when the consumer does not perform agricultural work on a certain farmland by himself/herself, he/she can requests the cultivator who is provided with the farmland to perform the agricultural work. However, Patent Literature 1 does not disclose a specific method for requesting a cultivator to perform agricultural work by a consumer.

### CITATION LIST

### Patent Literature

Patent Literature 1 : Japanese Patent Laid-open No. 2011-254711

### DISCLOSURE OF INVENTION

### PROBLEMS TO BE SOLVED BY THE INVENTION

It is an object of this invention to provide a work reliever mediation system that can easily search for a work reliever suitable for work.
It is also an object of this invention to provide a work reliever mediation system that can easily search for a farm machine sharer suitable for work.

### MEANS FOR SOLVING THE PROBLEMS

An embodiment of this invention provides a work reliever mediation system including: a server including: a first storage unit that stores work plan information including a scheduled work date, a work target field, and a work name for each user and for each work scheduled by the user; a second storage unit that stores work plan information including a scheduled work date, a work target field, and a work name for each work reliever candidate and for each work scheduled by the work reliever candidate; and a third storage unit that stores a farm machine possessed by the work reliever candidate for each work reliever candidate; a user terminal for transmitting a relief request demand including a predetermined work plan to the server in a case where the user desires to request relief with respect to the predetermined work plan; and a reliever candidate terminal for allowing the work reliever candidate to communicate with the server, wherein when receiving the work relief request demand from the user terminal, the server selects, from among the work reliever candidates, a work reliever candidate who possesses a farm machine necessary for carrying out the predetermined work plan, and notifies the selected work reliever candidate that a relief request is made, and in a case where the server notifies the reliever candidate terminal that the relief is requested, the reliever candidate terminal is capable of displaying the predetermined work plan and providing the server with intention of the work reliever candidate who uses the reliever candidate terminal.

In this configuration, it is possible to easily search for a work reliever suitable for work.

An embodiment of this invention provides a farm machine sharer mediation system including: a server including: a first storage unit that stores work plan information including a scheduled work date, a work target field, and a work name for each user and for each work scheduled by the user; and a second storage unit that stores, for each farm machine sharer candidate, a farm machine possessed by the farm machine sharer candidate; a user terminal for transmitting a share request demand including a predetermined work plan to the server in a case where the user desires to request farm machine share with respect to the predetermined work plan; and a sharer candidate terminal for allowing the farm machine sharer candidate to communicate with the server, wherein when the server receives the share request demand from the user terminal, the server selects, as a sharer candidate, the farm machine sharer candidate who possesses a farm machine necessary for carrying out the predetermined work plan, and notifies the selected farm machine sharer candidate that a share request is made, and in a case where the server notifies the sharer candidate terminal that the share request is made, the sharer candidate terminal is capable of displaying the predetermined work plan and providing the server with intention of the farm machine sharer candidate who uses the sharer candidate terminal.

In this configuration, it is possible to easily search for a farm machine sharer suitable for work.

### BRIEF DESCRIPTION OF DRAWINGS

FIG. 1 is a block diagram illustrating an electrical configuration of a mediation system.
FIG. 2 is a schematic diagram illustrating an example of a first work plan table.
FIG. 3 is a schematic diagram illustrating an example of a second work plan table.
FIG. 4 is a schematic diagram illustrating an example of a reliever/sharer candidate information table.
FIG. 5A is a sequence diagram for illustrating a part of operation of a user terminal, a mediation server, and a reliever/sharer candidate terminal when a user searches for a work reliever or a farm machine sharer.
FIG. 5B is a sequence diagram for illustrating a part of operation of the user terminal, the mediation server, and the reliever/sharer candidate terminal when a user searches for a work reliever or a farm machine sharer.

### DESCRIPTION OF EMBODIMENTS

In the following, an embodiment of this invention will be described in detail with reference to the accompanying drawings.

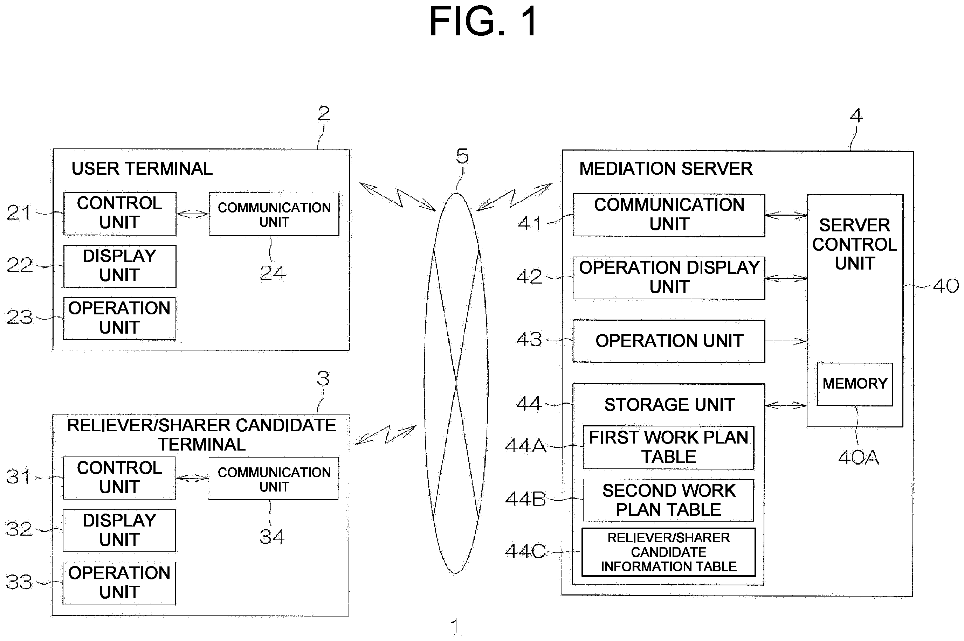

FIG. 1 is a block diagram illustrating an electrical configuration of a mediation system.
A mediation system 1 is a system for mediating between a user who performs agricultural work by using a farm machine and a work reliever who relieves work or a farm machine sharer who shares the farm machine. In this embodiment, the mediation system 1 is an example of a "work reliever mediation system" and a "farm machinery sharer mediation system" of the present invention. Examples of the farm machine include a tractor, a rice transplanter, and a combine.

The mediation system 1 includes a user terminal 2 used by a user who possesses one or a plurality of fields, a reliever/sharer candidate terminal 3 used by a work reliever/farm machine sharer candidate (hereinafter referred to as "reliever/sharer candidate") capable of relieving work in place of the user or sharing a farm machine, and a mediation server 4. In this embodiment, the "reliever/sharer candidate terminal 3" is an example of a "reliever candidate terminal" and a "share candidate terminal" of the present invention. The mediation server 4 is an example of a "server" of the present invention.

The user terminal 2 and the reliever/sharer candidate terminal 3 can communicate with the mediation server 4 via a network 5.
The user terminal 2 is composed of a smartphone in this embodiment, and includes a control unit 21, a display unit 22, an operation unit 23, and a communication unit 24. The communication unit 24 is a communication interface for allowing the control unit 21 to communicate with the mediation server 4 via the network 5.

The control unit 21 includes a CPU, a memory, and the like, although not illustrated in the figure. The memory stores programs such as a browser for browsing a web page, an application for searching for a work reliever or a farm machine sharer via the mediation server 4 (hereinafter referred to as a "reliever/sharer searching application"), and other necessary data are stored, in addition to an operating system (OS).

The reliever/sharer candidate terminal 3 is composed of a smartphone in this embodiment, and includes a control unit 31, a display unit 32, an operation unit 33, and a communication unit 34. The communication unit 34 is a communication interface for allowing the control unit 31 to communicate with the mediation server 4 via the network 5.
The control unit 31 includes a CPU, a memory, and the like, although not illustrated in the figure. The memory stores programs such as a browser for viewing a web page, and other necessary data, in addition to an operating system (OS).

The mediation server 4 includes a server control unit 40. The server control unit 40 includes a microcomputer equipped with a CPU and a memory (such as a volatile memory and a non-volatile memory) 40A. A communication unit 41, an operation display unit 42, an operation unit 43 and a storage unit 44 are electrically connected to the server control unit 40.
The communication unit 41 is a communication interface for allowing the server control unit 40 to communicate with the user terminal 2 and the reliever/sharer candidate terminal 3 via the network 5. The operation display unit 42 is composed of, for example, a touch panel display. The operation unit 43 includes, for example, a keyboard, a mouse, and the like.

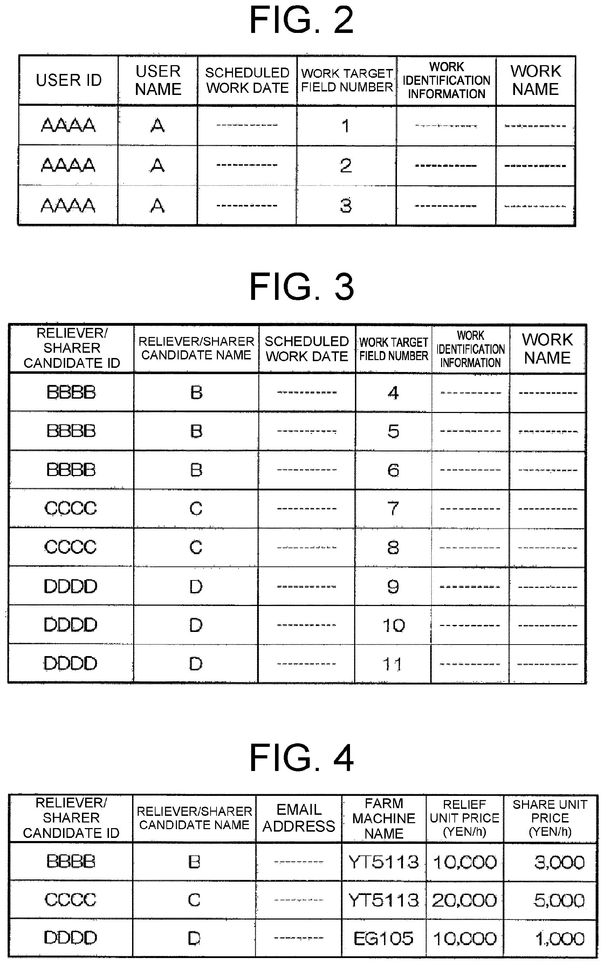

The storage unit 44 is composed of a storage device such as a hard disk and a non-volatile memory. A first work plan table 44A, a second work plan table 44B, a reliever/sharer candidate information table 44C, and the like are stored in the storage unit 44.
In the first work plan table 44A, for example, work plan information such as a user name, a scheduled work date, a work target field number, work identification information, and a work name is stored for each user ID and for each work scheduled by the user, as illustrated in FIG. 2. The user name is a name of a user. The scheduled work date is a scheduled date when work is to be performed. The work target field number is a number (field ID) of a field where work is to be performed. The work identification information (work ID) is information for identifying work. The work name is a name of work.

In the example of Fig. 2, only user A whose user ID is AAAA is illustrated as a user for convenience of explanation.
In the second work plan table 44B, for example, work plan information such as a reliever/sharer candidate name, a scheduled work date, a work target field number, work identification information, and a work name is stored for each reliever/sharer candidate ID and for each work scheduled by the reliever/sharer candidate, as illustrated in FIG. 3. The reliever/sharer candidate name is a name of a reliever/sharer candidate.

In the example of FIG. 3, a reliever/sharer candidate B whose reliever/sharer candidate ID is BBBB, a reliever/sharer candidate C whose reliever/sharer candidate ID is CCCC, and a reliever/sharer candidate D whose reliever/sharer candidate ID is DDDD are illustrated as the reliever/sharer candidates, for convenience of explanation.
In the reliever/sharer candidate information table 44C, for example, a reliever/sharer candidate name, an email address, a farm machine name possessed by the reliever/sharer candidate, a relief unit price, a share unit price, and the like are stored for each reliever/sharer candidate ID, as illustrated in FIG. 4.

The email address is an email address set in the reliever/sharer candidate terminal 3. The farm machine name is a model name in this embodiment. The relief unit price is a relief fee per hour. The share unit price is a farm machine share fee per hour.

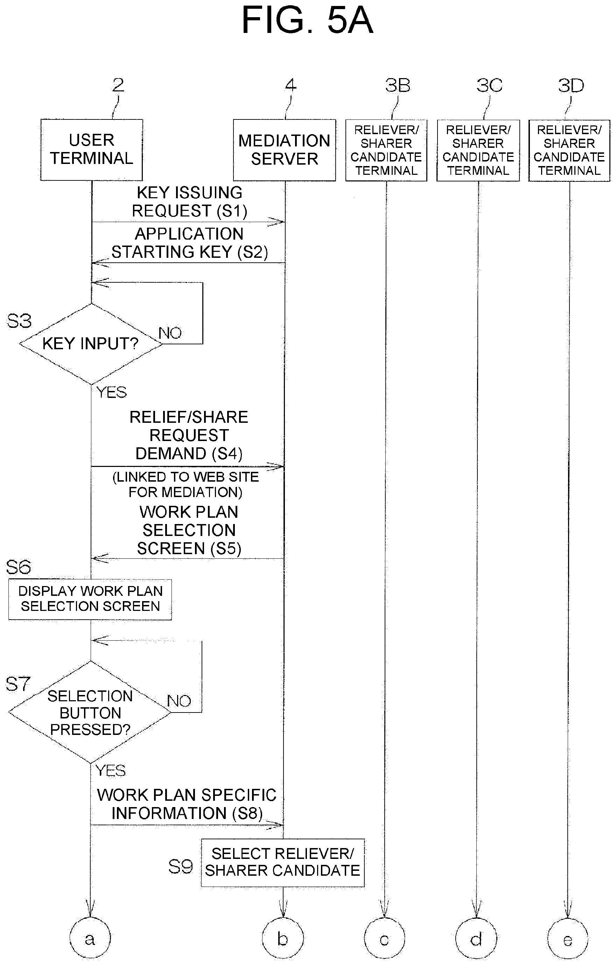

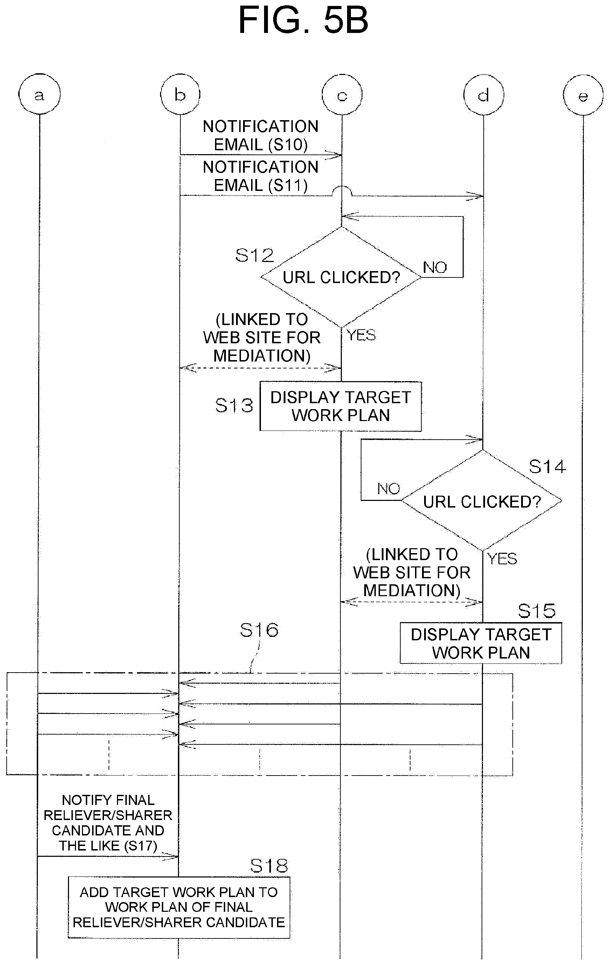

FIG. 5A and FIG. 5B are sequence diagrams for illustrating the operation of the user terminal 2, the mediation server 4, and the reliever/sharer candidate terminal 3 when a user searches for a work reliever or a farm machine sharer.

Herein, a case where a user A (see FIG. 2) searches for a work reliever or a farm machine sharer will be described. In addition, in FIG. 5A, respective reliever/sharer candidate terminals used by reliever/sharer candidates B, C, and D are denoted by 3B, 3C, and 3D.
With reference to FIG. 5A, the user A operates the user terminal 2 to transmit a request for issuing an application starting key (key issuing request) necessary to start an reliever/sharer searching application to the mediation server 4 (Step S1).

When the mediation server 4 receives the key issuing request, the application starting key is provided to the user terminal 2 (Step S2).
The user A inputs the application starting key provided by the mediation server 4 to the user terminal 2. When the application starting key is input (Step S3: YES), the reliever/sharer searching application is started on the user terminal 2, a relief/share request demand including the user ID is transmitted to the mediation server 4 (Step S4). Consequently, the user terminal 2 is linked to a predetermined web site for mediation that exists in the mediation server 4.

When the mediation server 4 receives the relief/share request demand including the user ID, a web page including a work plan selection screen for allowing the user to select a work plan which is a target of work relief or farm machine share is provided to the user terminal 2 (Step S5). Specifically, the mediation server 4 reads all the work plan information corresponding to the received user ID from the first work plan table 44A. Then, the mediation server 4 creates a web page including a work plan selection screen having a list of the read work plan information and a selection button for selecting each work plan information, and provides the created web page to the user terminal 2.

Consequently, the work plan selection screen is displayed on the display unit 22 of the user terminal 2 (Step S6). The user A selects the work plan as a target work plan by pressing the selection button corresponding to one of the work plans, which is a target of work relief or farm machine share, on the work plan selection screen.
When any of the selection buttons on the work plan selection screen is pressed (Step S7: YES), the work plan specific information for specifying the work plan (target work plan) corresponding to the pressed selection button is transmitted to the mediation server 4 (Step S8).

The mediation server 4 selects, on the basis of the reliever/sharer candidate information table 44C, an reliever/sharer candidate having a farm machine that is suited to the target work plan selected by the user A (Step S9). Herein, it is assumed that among the reliever/sharer candidates B, C, and D (see Figure 4), the reliever/sharer candidates B and C are selected.
With reference to FIG. 5B, the mediation server 4 sends, to the reliever/sharer candidate terminals 3B and 3C used by the reliever/sharer candidates B and C selected in Step S9, an email including a predetermined URL (Uniform Resource Locator) and notifying that a relief/share request is made (hereinafter referred to as a "notification email") (Steps S10 and S11). The predetermined URL is a URL representing the above web site for mediation that exists in the mediation server 4.

When the reliever/sharer candidates B and C receive the notification email, the reliever/sharer candidates B and C each click the URL in the email. For example, when the reliever/sharer candidate B clicks the URL in the notification email (Step S12: YES), the reliever/sharer candidate terminal 3B is linked to the above web site for mediation. Consequently, the web page including the target work plan selected by user A is provided from the mediation server 4 to the reliever/sharer candidate terminal 3B, and therefore the target work plan is displayed on the display unit 32 of the reliever/sharer candidate terminal 3B (Step S13). Consequently, the reliever/sharer candidate B can recognize the target work plan. Hereafter, the user A and the reliever/sharer candidate B can negotiate work relief or farm machine share by writing on an electronic bulletin board on the above web site for mediation (mediation server 4).

Similarly, when the reliever/sharer candidate C clicks the URL in the relief/share request notification email (Step S14: YES), the reliever/sharer candidate terminal 3C is linked to the above web site for mediation. Consequently, the web page including the target work plan selected by user A is provided from the mediation server 4 to the reliever/sharer candidate terminal 3C, and therefore the target work plan is displayed on the display unit 32 of the reliever/sharer candidate terminal 3C (Step S15). Consequently, the reliever/sharer candidate C can recognize the target work plan. Hereafter, the user A and the reliever/sharer candidate C can negotiate work relief or farm machine share by writing on an electronic bulletin board on the above web site for mediation (mediation server 4).

The reliever/sharer candidate terminals 3B and 3C are linked to the above web site for mediation, and thereafter negotiations for work relief or farm machine share are conducted between the user A and the reliever/sharer candidate B and between the user A and the reliever/sharer candidate C (Step S16).
When the user A determines a final reliever/sharer candidate by negotiating work relief or farm machine share with the reliever/sharer candidates B and C, the user A notifies the final reliever/sharer candidate and the contents of the request (such as the distinction of work relief or farm machine share) to the mediation server 4 (Step S17).

When the mediation server 4 is notified of the final reliever/sharer candidate and the contents of the request, the mediation server 4 adds the work plan selected by the user A (target work plan) to the work plan of the reliever/sharer candidate (Step S18).
In the above embodiment, when a user desires to search for a work reliever who relieves a certain work, the user can easily search for a work reliever suitable for the work. In addition, when a user desires to search for a farm machine sharer who shares a farm machine used for a certain work, the user can easily search for a farm machine sharer suitable for the work.

Although the embodiment of this invention is described above, this invention can be further implemented in other forms.
For example, the mediation server 4 may charge an intermediary fee to a final reliever/sharer candidate.
In the above embodiment, the reliever/sharer candidate information table 44C (see FIG. 4) stores, for each reliever/sharer candidate ID, the reliever/sharer candidate name, the email address, the farm machine name possessed by the reliever/sharer candidate, the relief unit price, the share unit price, and the like. However, registered location of the reliever/sharer candidate and a corresponding possible distance from the registered location may be added to the items of the reliever/sharer candidate information table 44C. The corresponding possible distance is a distance from the location of the user terminal 2 of the relief/share requestor.

In this case, in Step S9 of FIG. 5 described above, the mediation server 4 selects, on the basis of the reliever/sharer candidate information table 44C, a reliever/sharer candidate who has a farm machine suited to a work plan selected by the user A and whose distance from the location of the user terminal 2 of the user A to the registered location of the reliever/sharer candidate is within the corresponding possible distance.
Various changes can be made within the scope of the claims.

### Supplementary Note of Invention

In an embodiment of this invention, the user terminal and the reliever candidate terminal are configured to be able to negotiate work relief through the server after the server notifies the reliever candidate terminal that a relief request is made.

In an embodiment of this invention, the server is configured to add the predetermined work plan to the work plan of the candidate work reliever when the final work reliever candidate who performs a work relief request with respect to the relief request demand is determined.

In an embodiment of this invention, the user terminal and the sharer candidate terminal are configured to be able to negotiate farm machine share via the server after the server notifies the sharer candidate terminal that a share request is made.

## Claims

1. A work reliever mediation system comprising:
a server including: a first storage unit that stores work plan information including a scheduled work date, a work target field, and a work name for each user and for each work scheduled by the user; a second storage unit that stores work plan information including a scheduled work date, a work target field, and a work name for each work reliever candidate and for each work scheduled by the work reliever candidate; and a third storage unit that stores a farm machine possessed by the work reliever candidate for each work reliever candidate;
a user terminal for transmitting a relief request demand including a predetermined work plan to the server in a case where the user desires to request relief with respect to the predetermined work plan; and
a reliever candidate terminal for allowing the work reliever candidate to communicate with the server, wherein
when receiving the work relief request demand from the user terminal, the server selects, from among the work reliever candidates, a work reliever candidate who possesses a farm machine necessary for carrying out the predetermined work plan, and notifies the selected work reliever candidate that a relief request is made, and
in a case where the server notifies the reliever candidate terminal that the relief is requested, the reliever candidate terminal is capable of displaying the predetermined work plan and providing the server with intention of the work reliever candidate who uses the reliever candidate terminal.

2. The work reliever mediation system according to claim 1, wherein
the user terminal and the reliever candidate terminal are capable of negotiating work relief through the server after the server notifies the reliever candidate terminal that the relief request is made.

3. The work reliever mediation system according to claim 1 or 2, wherein
when a final work reliever candidate who performs work relief with respect to the relief request demand is determined, the server adds the predetermined work plan to a work plan of the final work reliever candidate.

4. A farm machine sharer mediation system comprising:
a server including: a first storage unit that stores work plan information including a scheduled work date, a work target field, and a work name for each user and for each work scheduled by the user; and a second storage unit that stores, for each farm machine sharer candidate, a farm machine possessed by the farm machine sharer candidate;
a user terminal for transmitting a share request demand including a predetermined work plan to the server in a case where the user desires to request farm machine share with respect to the predetermined work plan; and
a sharer candidate terminal for allowing the farm machine sharer candidate to communicate with the server, wherein
when the server receives the share request demand from the user terminal, the server selects, as a sharer candidate, the farm machine sharer candidate who possesses a farm machine necessary for carrying out the predetermined work plan, and notifies the selected farm machine sharer candidate that a share request is made, and
in a case where the server notifies the sharer candidate terminal that the share request is made, the sharer candidate terminal is capable of displaying the predetermined work plan and providing the server with intention of the farm machine sharer candidate who uses the sharer candidate terminal.

5. The farm machine sharer mediation system according to claim 4, wherein
the user terminal and the sharer candidate terminal are capable of negotiating farm machine share through the server after the server notifies the sharer candidate terminal that the share request is made.
